# EUROPEAN PATENT SPECIFICATION

(11) **EP 0 409 975 B1**
(45) Date of publication and mention of the grant of the patent: **29.01.1997**
(21) Application number: 90903974.5
(22) Date of filing: 16.02.1990
(51) Int. Cl.: G02F 1/133

(54) **LIQUID CRYSTAL DEVICES USING A LINEAR ELECTRO-OPTIC EFFECT**
FLÜSSIGKRISTALLVORRICHTUNGEN UNTER VERWENDUNG EINES LINEAREN ELEKTROOPTISCHEN EFFEKTS
DISPOSITIFS A CRISTAUX LIQUIDES UTILISANT UN EFFET ELECTRO-OPTIQUE LINEAIRE

(30) Priority: 16.02.1989 SE 8900563
(43) Date of publication of application: 30.01.1991
(73) Proprietor: S.A.R.L. S.T. Lagerwall, F-83150 Bandol (FR)
(72) Inventor: DAHL, Ingolf, S-431 61 Mölndal (SE); ANDERSSON, Gunnar, S-411 29 Göteborg (SE); STEBLER, Bengt, S-412 66 Göteborg (SE); KOMITOV, Lachezar, S-411 29 Göteborg (SE); SKARP, Kent, S-427 00 Lindome (SE); LAGERWALL, Sven, Torbjörn, S-414 75 Göteborg (SE)
(74) Representative: Grennberg, Erik Bertil
(86) International application number: SE9000109
(87) International publication number: WO9009614

(56) References cited:
- US-A- 4 725 129
- US-A- 4 729 642
- Applied Physics Letters, Vol. 51, No. 9, August 1987 (New York) G. ANDERSSON et al: "Submicrosecond Electro-Optic Switching in the Liquid-Crystal Smetic a Phase: the Soft-Mode Ferroelectric Effect", see page 640- page 642 especially page 640, line 1 - line 17
- Journal of Applied Physics, Vol. 66, No. 10, November 1989 (New York) G. ANDERSSON et al: "Device Physics of the Soft-Mode Electro-Optic Effect", see page 4983 - page 4995
- Ferroelectrics, Volume, Vol. 84, 1988 (New York) G. ANDERSSON et al: "The Soft- Mode Ferroelectric Effect", see page 285 - page 315 especially page 285 - page 287, line 3

## Description

The present invention relates to liquid crystal devices exhibiting an electrooptic effect which is linear in the electric field. Examples of such devices are those using tilted chiral smectic materials, in which the utilized effect is based on a ferroelectric response, or those using orthogonal chiral smectic materials using the electroclinic effect. Electroclinic effects can be used also in chiral nematic materials.

### Description of prior art

Surface-stabilized ferroelectric crystals (SSFLC) are capable of powerful electrooptic effects such as the kind described in US Patent no. 4,367,924 to Clark and Lagerwall, in which the optic axis upon reversal of the sign of an applied electric field swings around a cone to a new direction, ideally inclined at 45 degrees relative to the initial one. If the polarization plane of the incident light lies in this intial direction and if the optical thickness of the liquid crystal is matched to be a λ/2 plate, then, the exiting light, after having traversed the cell, will have its plane of polarization rotated to a direction which is perpendicular to the polarization plane of the incident light. This condition gives a maximum of contrast and brightness for the electrooptic effect, but requires a smectic cone angle of 22,5 degrees for the smectic material.

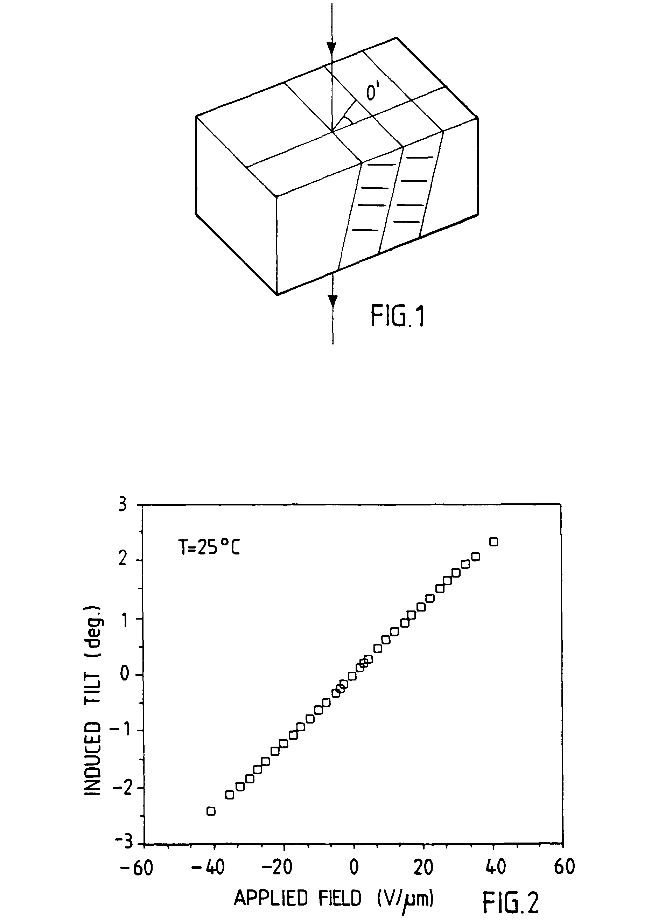

A unique feature of the electro-optic response both in the SSFLC and SMFLC mode is that the effective change of the optic axis is a rotation in the plane of the sample, cf. Fig. 1. In both cases, the so-called book-shelf configuration ie employed, i.e. with the smectec layers standing essentially perpendicular to the cell glass plates or to the confining surfaces in the case that other materials like polymer foils are used instead of glass substrates. An applied electric field of one sign thus corresponds to an optic axis inclined in one direction relative to the normal cutting the layers in the cell plane, whereas a field of opposite sign induces an inclination of the opposite direction relative to this normal. Thus, the molecules effectively rotate around an axis which is in the direction of the applied electric field, and, in this case, also of the incident light (cf. Fig 1). This is a fundamental feature required by the linearity of the effect, distinguishing this family of devices from other liquid crystal devices, which are based on quadratic effects and in which the rotation axes of the molecules are essentially perpendicular to the direction of the electric field, or of the light, or both.

Very often this condition of rotating the polarization plane by 90 degrees cannot be met because of a complex layer structure of the smectic liquid crystal of the cell, giving an apparent value of the cone angle, as seen projected in the cell plane, which is considerably smaller than 22,5 degrees, commonly of the order of 7 to 15 degrees. In such a case, the rotation of the polarization plane is considerably less than 90 degrees and the electro-optic effect, though still very rapid, is capable of giving only a fraction of the achievable contrast, or, alternatively, will suffer from low transmitted intensity in the transmissive state of the device.

If instead of an SSFLC cell, a so-called soft-mode cell (SMFLC) is employed using an orthogonal chiral smectic liquid crystal (cf. US patent no. 4,838,663), the induced shift in optic axis direction on reversing the applied field is always less than required for producing maximum optical contrast. This is also the case when using a chiral nematic instead of a smectic material, only much more pronounced. Ferro-electrics, 1988 Vol. 84 pp. 285-315 discloses the use of SMFLC cells and mentions the use of retarders, for example on page 311.

Whereas the SSFLC cells are characterized by a pronounced threshold, and may switch between two bistable states. The SMFLC cells have no threshold and have an induced tilt angle increasing linearly with the applied field E (cf. Fig 2), and therefore an electrically controlled, continuous grey-scale is achievable. It is, of course, also possible to add or mix these properties in a device, filling the different component cells with different materials, ferroelectric and electroclinic, respectively.

One of the most attractive devices for real-time optical processing, incoherent-coherent, and thus also Fourier transformation of images is a spatial light modulator with an optically addressed photoconductor layer or pixel pattern acting on liquid crystal. Such a device should operate at high speed and low power, would not require memory, but would greatly benefit from a continuous grey scale.

Furthermore, the liquid crystal in this application should preferably work in reflective mode. Thus a single-cell reflective soft-mode device would seem ideal. A surface-stabilized device using a tilted smectic would operate in the same way, but with the maximum contrast without grey scale.

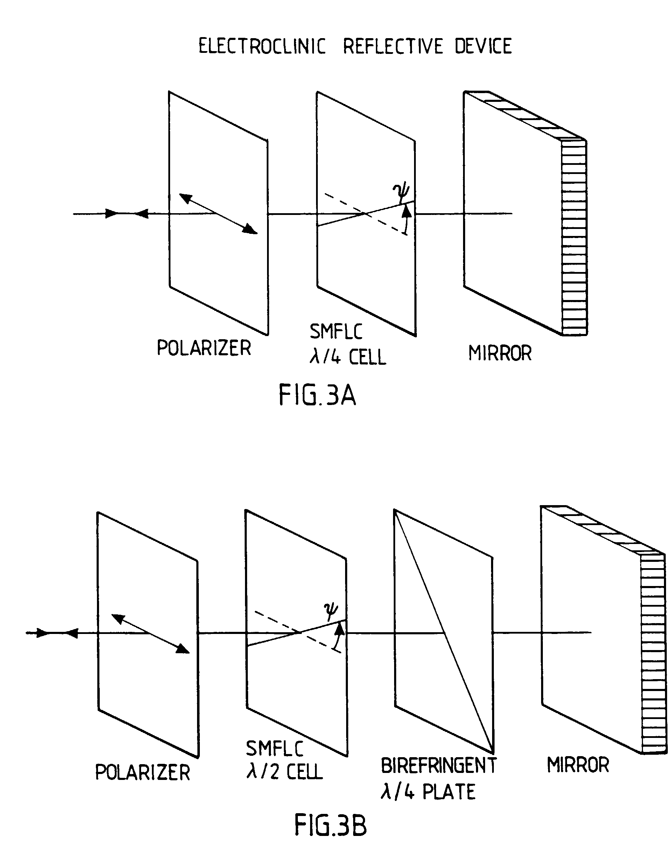

If the rotation of the polarization plane is sufficient to optimize contrast as well as transmission, i.e. if the effective angle swing is 45 degrees, then the simplest and most efficient reflective device would require a liquid crystal cell thickness corresponding to a quarter wavelength plate, as shown in Fig 3A. This device is known in the prior art. (EP-C-0219 480)

### Summary of the invention

As compared to the SSFLC or SMFLC prior art, the main object of the present invention is to remedy the insufficient contrast or transmissive intensity of the device and to provide a device which works over a wavelength region.

This object is achieved by a device according to claim 1, claim 3 or claim 9. Advantageous features are claimed in the subclaims.

If ferroelectric or electroclinic materials are used for the implementation of (reflective, double or multiple cell) devices described below does not, generally speaking, alter the optical design of these devices. Their use and performance will be different according to the utilized materials. Both give very rapid (submicrosecond) electrooptic response. Embodiments of the present invention will now be described with reference to the accompanying drawings, in which:

Figure 1 is a schematic view of an liquid crystal between electroded glass plates, showing the projection θ of the induced molecular tilt θ on the glass plates. Also shown are the projection of the molecular orientation (and the optic axis) in the neutral (field E = 0) case. In the case drawn the liquid crystal in a tilted bookshelf geometry.

Figure 2 shows the projection of the induced molecular tilt on the glass plates, as a function of applied voltage at 25°C. The liquid crystal mixture used in this example is 88-158 by Merck.

Figure 3 is a reflective single SMFLC cell device, (a) being a simple build-up yet requiring a 45° turn of the optic axis for full modulation, and (b), incorporating a birefringent λ/4 plate according to the invention, allows full modulation for a zero to 22.5 degree turn of the optic axis.

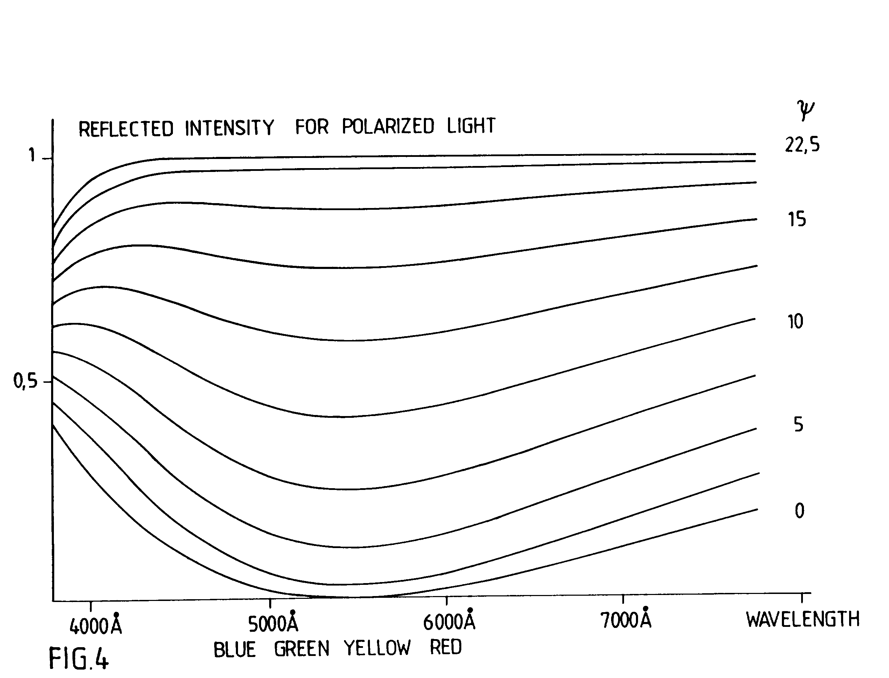

Figure 4 shows the wavelength dispersion of the transfer properties of the device according to Figure 3(b), in which the λ/2 condition for the liquid crystal cell and the λ/4 condition for the retarder plate is fulfilled at wavelength λ = 5460Å.

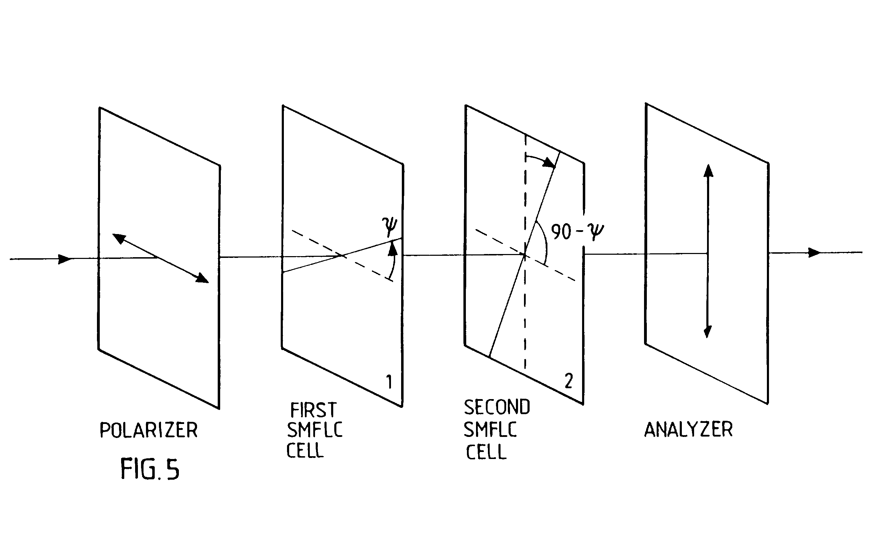

Figure 5 is a schematic view of an optimized double electroclinic cell between crossed polarizers, in which ψ, marks the angle between the optic axis of the first cell and the polarizer, and at the same time -ψ marks the angle between the optic axis of the second cell and the analyzer. ψ varies between 0 degrees, giving extinction, and 22.5 degrees, leading to full transmission.

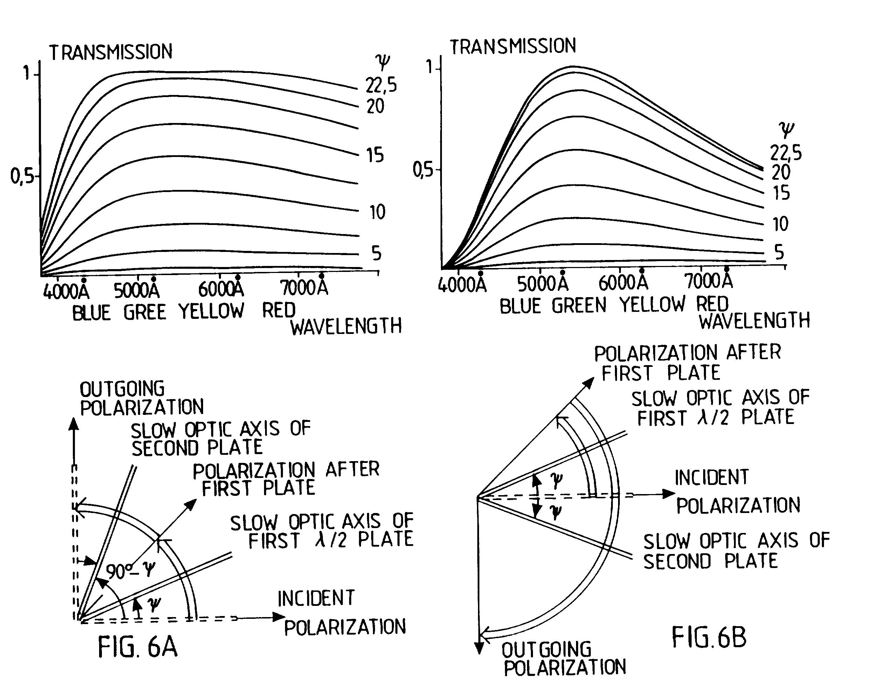

Figure 6 shows, for an electroclinic cell pair comprising a liquid crystalline substance (ZLI-3774 by Merck in its chiral smectic C∗ phase) of typical optical character (birefringence and wavelength dependence of the refractive indices), the calculated transmission for two set-ups and as a function of induced electroclinic angle ψ and of wavelength. The set-ups are, in case (a) an arrangement having the optic axes of the two electroclinic cells at right angles to each other at zero electric field, and in case (b) the cells' optic axes are arranged parallel to each other. As is illustrated, the turns of the cells' optic axes are to take place in opposite senses. Over the visible range of light, set-up (a) is seen to result in an almost ideal achromatic behaviour.

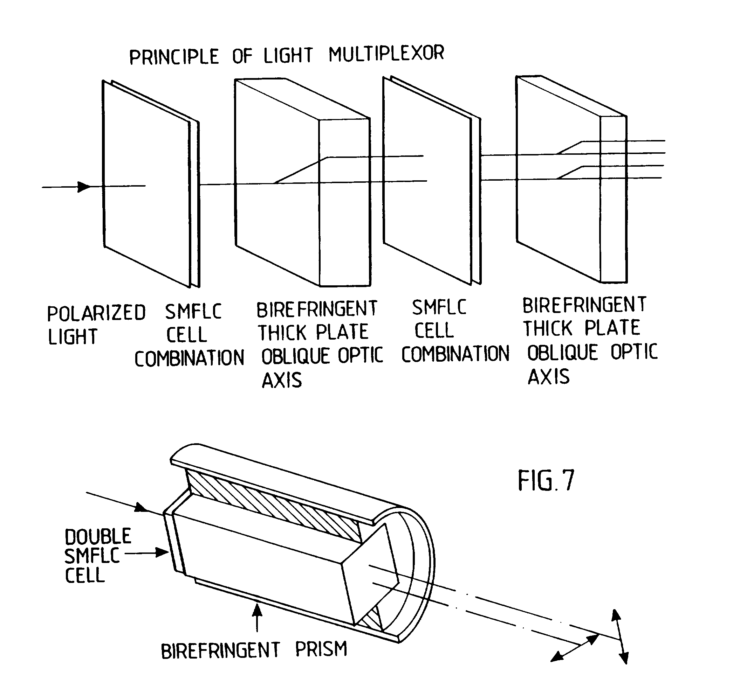

Figure 7 shows a schematic view of a light ray multiplexor (a) being built up by one or more doubling units (b), each consisting of an electroclinic cell combination (like that of Figure 5) along with a thick birefingent plate. The relative intensities of the ray components due to splitting in each birefringent plate are determined by the polarization state of incident ligth controlled by the electroclinic cells.

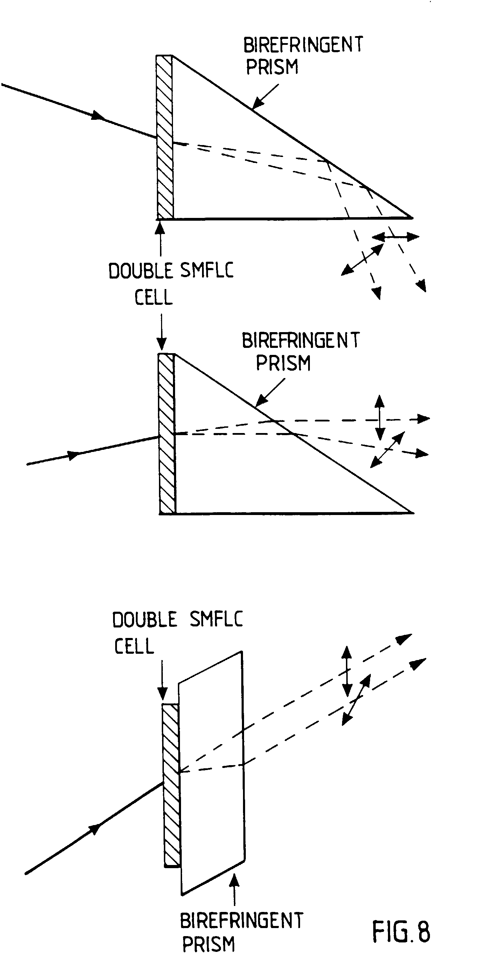

Figure 8 shows examples of double SMFLC cells glued onto single birefingent prism, allowing to electrically control the relative intensities of split and deflected light beams.

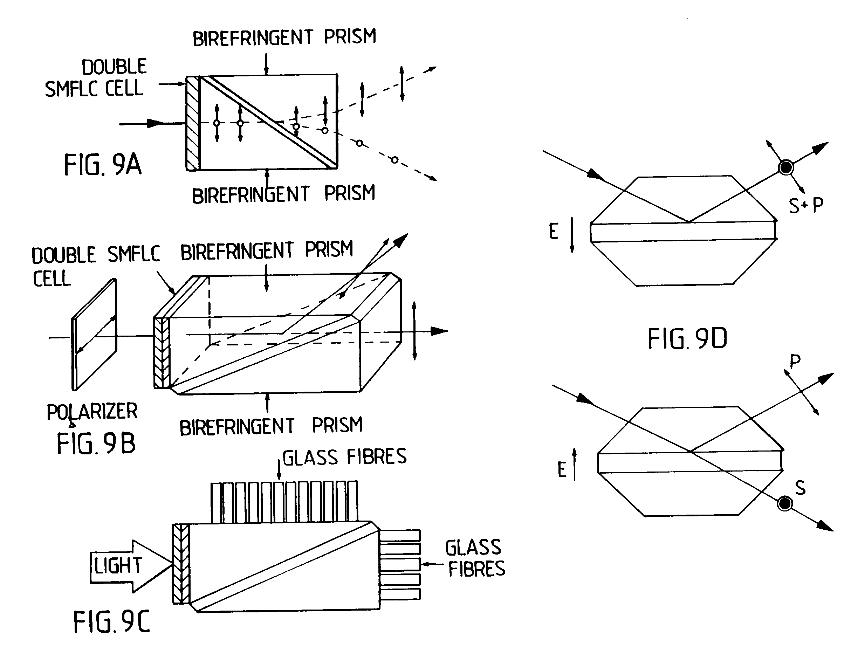

Figure 9 shows examples of optical switchboards, made up of combined doubled SMFLC cells and double birefingent (9a,b,c) or ordinary (9d) prisms, allowing to electrically control the change in birefringence and thereby the two (or four) outgoing components relative intensities (and the conditions of total reflection).

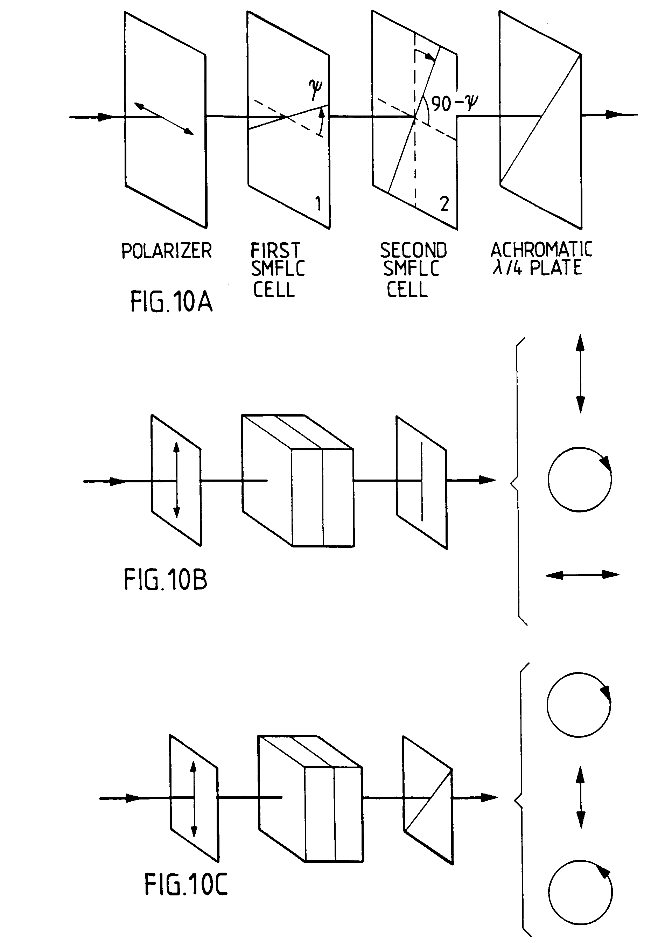

Figure 10 shows schematically examples of polarization switches combining retarders with double SMFLC cells; on 10(a), for one particular set-up, the relative orientations of polarizer, retarder and of the zero electric field (dashed lines) or switched (angles +ψ or -ψ) optic axes of the SMFLC cells. In 10(b) and (c) are seen arrangements allowing the switching, as illustrated, between orthogonal linearly polarized states via a (zero field) circularly polarized states (in opposite senses) via a (zero field) linearly polarized states.

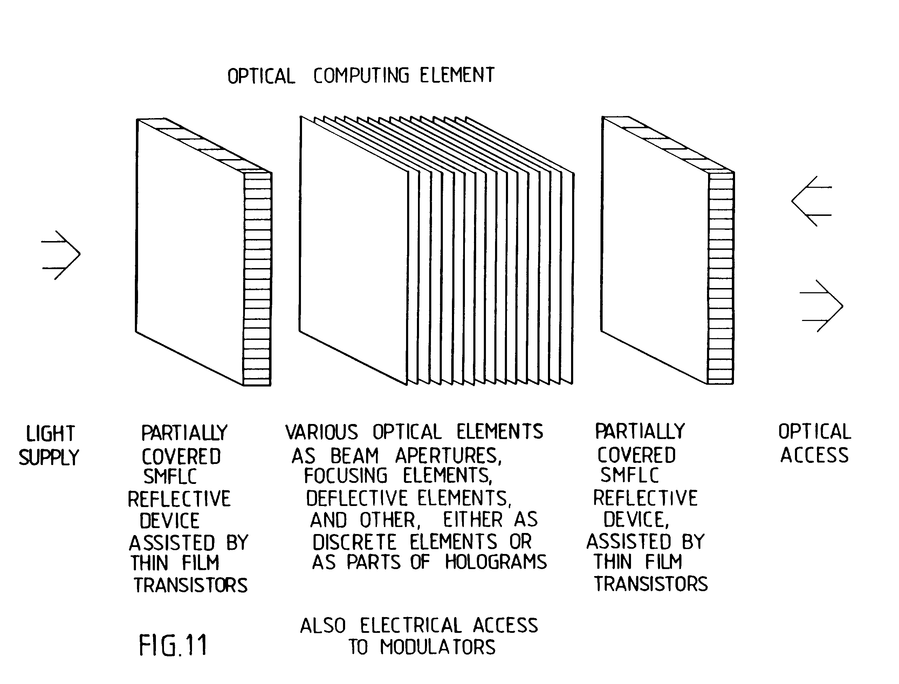

Figure 11 is a general outline of an optical computing element, consisting of two partially covered SMFLC reflective devices, each assisted by thin film transistors, and, in between, various conventional optical elements.

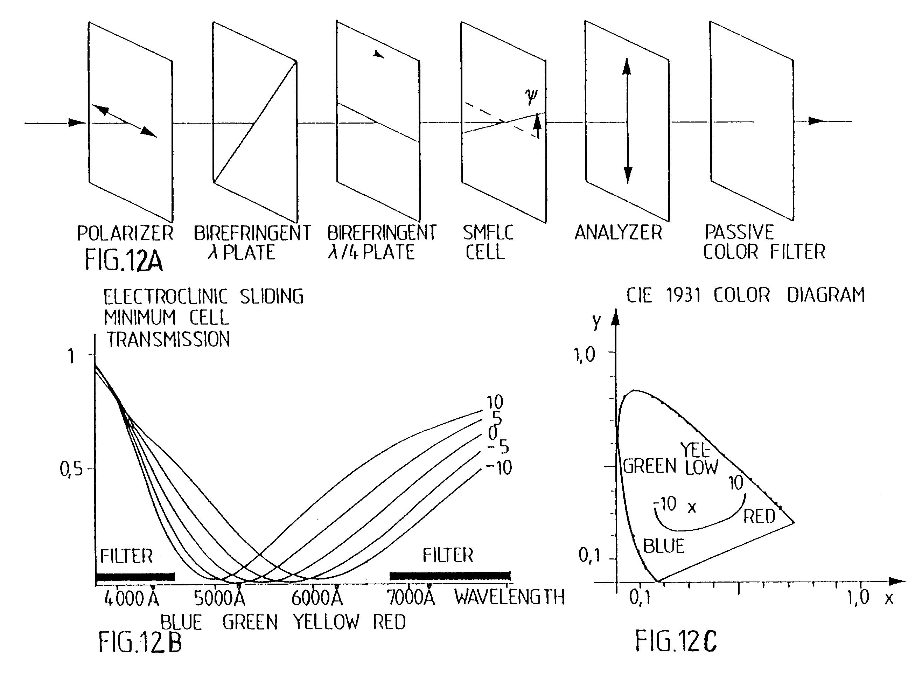

Figure 12 shows schematically one example of a colour controlling arrangement, here a sliding-minimum-wavelength filter. As seen in (a), a polarizer, a fullwave and a quarter wave plate are followed by a SMFLC cell, an analyzer and finally a passive colour filter, the relative orientations of optical axes marked for each component. The resulting transmission versus wavelength is seen in (b), showing the sliding minimum position depending on the SMFLC optical axis tilt (ψ=10.5, 0, -5 or -10 degrees). In (c) the corresponding colour change is seen in a CIE diagram.

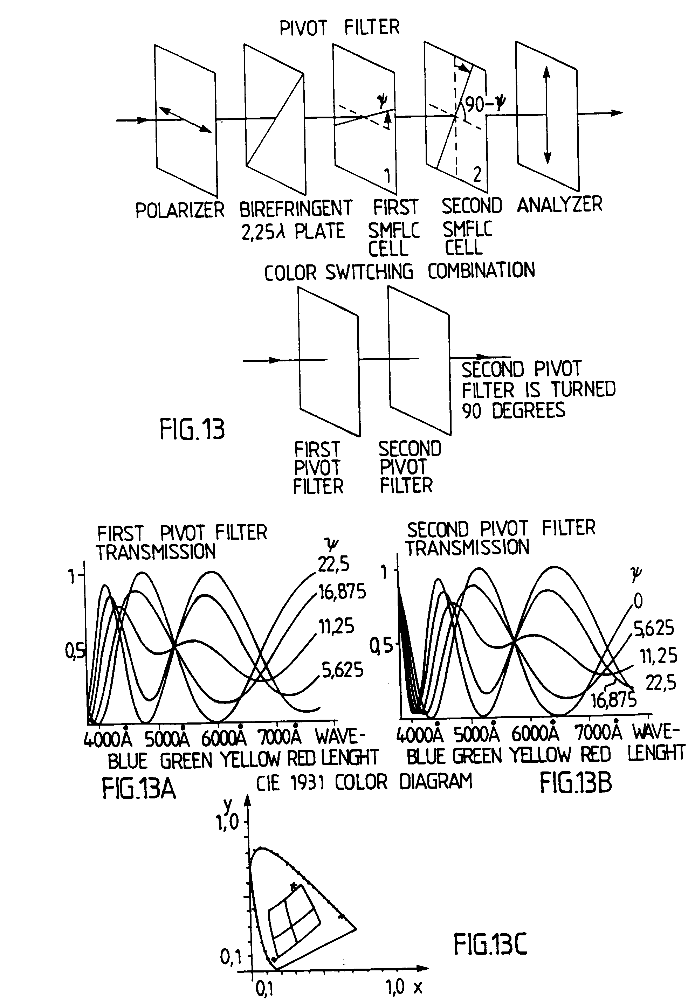

Figure 13 shows a colour switching filter, made up of a combination of two pivot filters (a) that allows a continuous variation of colours. In (b) and (c) are seen the transmission spectra of the two pivot filters, showing pivot points at wavelengths 5300Å and 5750Å, respectively. In (d) is shown the "window" in the CIE diagram corresponding to the different hues obtainable if the two pivot filters are varied independently. Stars indicate the blue, green and red phosphors used in cathode ray tubes.

Reference is made to Figure 3(b) showing a mirror preceded by a λ/4 retarder plate. In this device, we use the ability of the mirror to change the state of polarization of light. Linearly polarized light, reflected by a mirror at normal incidence, will still be linearly polarized in the same plane, but circularly polarized light will change its handedness. It is thus possible to see the mirror image if a linear polarizer is placed in front of a mirror. If instead a circular polarizer is placed in front of the mirror, the mirror will appear black. To get full modulation of a ferroelectric liquid-crystal device, it should thus be able to switch the light falling on the mirror from being linearly polarized to become circularly polarized. This is what is accomplished in the already discussed λ/4 cell of Fig 3(a), requiring a 45 degree swing of the optic axis to get full modulation. This means it would require a 22.5 degree material, so far only available as SSFLC not yet approached by SMFLC. Using a λ/2 cell together with a fixed λ/4 retarder, however, as in the setup of Figure 3(b), the device can be realized with either C∗ or A∗ material, for instance, where the tilt (C∗) or the maximum induced tilt (A∗) is 11.25 degrees. A difficulty with this design is that the property of being a halfwave or a quarterwave plate can be fulfilled only for a certain wavelength λ. If not properly made, the design of the compound cell will add the chromaticity of the parts so that the cell is more chromatic than either component. On the contrary, with axis directions carefully chosen, a compensation of the wavelength dependence can be achieved so that the combination is nearly achromatic, i.e. with a flat wavelength transmission characteristics, thus well adapted to process even white light. We can arrange the orientation of the polarizer, the SMFLC cell and the retarder plate in various ways, but a comparison indicates that the arrangement shown in Figure 3(b) gives optimum wavelength characteristics: If the slow axis in the case of a soft-mode cell is made to turn between 0° and 22.5° relative to the transmission direction of the polarizer, the slow axis of the λ/4 plate should be at the angle 45° relative to the polarizer. Thus the retarding effects of the active cell and of the fixed retarder plate should to some degree be counteracting. The spectral characteristics of such a device are shown in Figure 4. The wavelength behaviour is comparable to that of two cells in transmission (see below), with better achromaticity at maximum reflection, but not so good extinction at minimum reflection. This property could be further optimized by tailoring the dispersion of Δn.

Even if the tendency today goes towards backlit displays, there will always be a need for screens working mainly in reflection - either because of minimum power requirements or because of powerful ambient illumination. For high resolution or video applications, the multiplexed single-cell C* reflective devices, or single-cell A reflective devices, combined with thin-film transistors offer the most powerful solutions. It might be pointed out that the described arrangement, extended by a suitable polarizer behind a transflective reflector, works at the same time in transmission. A reasonable and simple choice is to optimize brightness for the reflective mode, which has to be paid by a 50% light loss in transmission mode, which can always be compensated by backlighting power.

As we have seen, a single liquid crystal cell is sufficient for adequately amplifying the polarization plane rotation in the reflective mode. In the transmissive mode, a double cell will be necessary. As in the double pass, with two cells in series we can amplify a tilt Θ to the value 8Θ, when talking of the amount of rotation of polarization. Each cell contributes to a turn of 4Θ: an induced tilt angle of 10° could thus by the use of two cells turn the plane of polarization by 80°, and as before, 11.25° of induced tilt is needed if we want to achieve the ideal value of 90°.

Since the possible change in tilt angle is twice the maximum tilt angle, we see that the maximum tilt angle should be multiplied by 8 to give maximum rotation of the plane of polarization. Moreover, such pairs can be piled to further enhance the effect: The optical rotation grows linearly with the number of devices.

To obtain the light valve device in practice, we assume that two SMFLC cells are placed between two crossed polarizers, and we want zero transmission at one limiting value of the control voltage and maximum transmission at the other one. The preferred choice is then to place two identical λ/2 cells on top of each other, in such a way that the zero transmission state is obtained when the slow optic axes of the two cells are perpendicular to each other, coinciding with the polarizer and analyzer directions, respectively, as shown in Figures 5 and 6(a). When changing the applied voltage, the optic axis of the first cell should swing out counterclockwise to the angle ψ, and the optic axis of the second cell should turn clockwise, to the angle 90° -ψ, measured relative to the polarizer transmission direction. The angle between the optic axes then becomes 90°-2ψ, and the plane of poarization is thus turned the angle 180°-4ψ, which gives a four times magnification, the tilt angle swing needs to be +11.25° and the zero field azimuth angle ψₒ of the two cells should thus be chosen as 11.25° and 78.75°, respectively. This tilt angle swing is in the range of what is achievable with present materials. In principle, the same operation would be possible if the slow optic axes of the two cells had been parallel in the initial state [cf.Figure 5(b)]. The reason why we choose them perpendicular is that the λ/2 condition is only fulfilled for one specific wavelength λ, whereas it is clearly desirable to have the device working in the prescribed mode over as large a wavelength region as possible. By interchanging the fast and slow directions of one of the cells, the chromaticity partly compensates instead of add, so that the combination will show fairly flat wavelength characteristics, especially towards the red-infrared part of the spectrum. The calculated transmission spectra are shown in Figure 6, where a comaprison is made between the two cases. If we pile two such pairs on top of each other (this combination requiring then only half of 11.25° tilt in each single cell for full modulation depth), the wavelength characteristics will become even slightly more flat. As we will see below, this combiantion of two soft mode cells is also suitable to be included in colour switching devices.

With a continuous varying control voltage, an excellent grey-scale device is achieved, with a contrast high enough (set by the polarizers and the cell quality) to fully utilize the grey-scale dynamics. The price we have to pay is the complexity of two cells and four electrodes. In principle, by filing one cell with one smectic-A mixture and the other with its optical antipode, the same sign of voltage could be used over the two cells, and then in principle a construction with only two electrodes is possible. To make practical devices out of this idea, sheets of smectic-A* or -C* polymer could be laminated in a plywoodlike structure. This would enable close packing without mixing of the optical antipodes. In this context, one might contemplate the basic question about the fundamental prerequisites for the electroclinic effect. Maybe we could expect an electroclinic effect in some polymers, made out of chiral monomers, even without the smectic layer structure. Maybe even the presence of a plymeric backbone could replace the smectic layer structure as symmetry breaking element.

We could thus obtain an optical component that is as fast as a single electroclinic cell, but with possibilities to give full modulation of light or, alternatively, to rotate the polarization plane by 90°. Since we could make use of small tilt angles, we could choose the temperature of the cells a bit further inside the smectic-A phase, away from the phase transition to smectic-C, and make use of the smaller, but faster, and less temperature-dependent electroclinic effect there. The additive properties of multiple electroclinic cells could also be used to make analog or logical addition.

There are also numerous applications, where the cells could be combined with polarization-sensitive deflective optical components, to control the light path through an optic system. There are several different polarization-sensitive deflective optical devices available. Such components could use berefringent plates with suitably arranged optic axes, gratings, especially those made of birefringent material, Brewster windows, total internal reflection in birefringent materials, the reflective properties of one-dimensional conductors, etc. By placing electroclinic cell combinations and this other component in alternating order in a row, we could control where the deflection should occur. In this way we could control and scan the lateral position of a light beam, which otherwise is a difficult problem. We could also construct optical switchboards of high speed and with relatively low light losses. These switchboards could be constructed by stackning electroclinic cell pairs together with birefringent plates of different thicknesses and with oblique optic axes as in Figure 7. Such a device could direct a light beam to any out of a big number of exit lines, or vice versa. If the liquid crystal cell pairs are arranged as linear arrays, a big number of entrance lines, by a quite simple, compact and fast construction. The light absorption in this type of switchboard will only be caused by material imperfections and not by the working principles as such, and thus the ligth losses could be kept quite small.

A great number of deviators, beam splitters, beam switchers, phase shifters and polarization switches could be designed either using SSFLC or SMFLC double cells in combination with prisms and retarders. We show some examples of beam splitters in Figure 8. In Figure 9 are shown simple examples of optical switchboards with a double cell in front and a deviator or communications switch with a single cell actively controlling the change in birefringence and thereby the refraction and total reflection.

Some examples of polarization switches using double-cells are shown in Figure 10. The zero-field state is illustrated at the top. One sign of the field now turns ψ to zero making the incoming vertical polarization staying vertical, whereas the other sign turns the polarization by 90 degrees. The zero field state gives circularly polarized light. By turning the back retarder 45 degrees linear polarization goes to circular and vice versa.

An optical computing element can be obtained in a variety of LC technologies, illustrared in a general way by Figure 11. Different threshold properties can be chosen not only by way of the liquid crystal but its combination with non linear-elements. Different logic can be chosen, like amplitude or polarization logic, the latter using binary or ternary states as just described.

In addition to the already mentioned applications, the SMFLC effect can be explored for high-speed colour switches. The cell behaves like a birefringent plate, with an almost constant phase difference δ and a field-sensitive direction of the optic axis. We can combine it with additional birefringent plates, to obtain switching between colours instead of switching between black and white. The possible change in position of the optic axis for the single cell is presently of the order ±10°, and we want here to discuss the possibilities to get significant colour changes in spite of the somewhat limited angular range of the electroclinic effect. For future materials with higher values of the induced tilt, the colour scan domain will increase accordingly. But already with available materials, there are highly interesting possibilities for colour generation, with switching between two or three significantly different colours for one electroclinic cell. With two filter combinations in series we could get switching between a great number of different colours, covering a large part of the physiological colour spectrum.

We give two examples of soft-mode cell combinations, containing fixed birefringence plates and working in transmission. The colour coordinates are calculated from the transmission spectra. The thickness of the cells has been chosen to give a phase retardation of λ/2 at some wavelength, since approximately this thickness should give maximum optical response and speed for minimum applied voltage.

The first combination may be denoted a sliding-minimum filter (see Figure 12). We build up this combination by starting with a polarizer and a fixed birefringence plate of optical path difference of 5460Å that is a normal λ plate, turned 45°. (All angles are measured relative to the transmission direction of the polarizer). Then, we take a λ/4 plate, with path difference 1365Å, parallel to the polarizer, followed by an SMFLC cell and an ananlyzer at 90°. The thickness of the soft-mode cell is 2.02 µm, which gives λ/2 plate at 5460Å. If the optic axis of this cell can be driven from -10° to +10° by an electric field, we will get the transmission curves displayed in Figure 12(b), where we can see how the position of the transmission minimum is displaced by the field. If light at wavelengths far from the minima are blocked by filters as indicated in Figure 12(b), we can generate colours along the trace shown in the CIE diagram shown in Figure 12(c): On the way from greenish blue to orange we will pass purple and red. The parameters are not fully optimized, but are chosen to give an illustration of what can be achieved. The transmission of polarized light through the cell (weighed by the eye sensitivity) varies between 5% and 17%.

According to another embodiment a combination containing two pairs of electroclinic cells in series, with a polarizer also between the cells, has one of the cells to control the blue-yellow contrast, the other the green-red contrast. By placing two colour switches in series, one switching continuously between blue and yellow with neutral transmission in red and green, and another switching continuously between green and red with neutral transmission for blue and yellow, all colour hues should be obtainable. Then we want each cell to generate approximately straight lines in the CIE diagram and thus the sliding-minimum combination is unsuitable. Instead, we can work with what we denote "pivot filters". If we want a shift between low-blue, high-yellow and high-blue, low-yellow transmission, it is reasonable to look for transmission curves that have a pivot point, that is, a point where the transmission is independent of the position of the optic axis of the electroclinic cell, at some wavelength in green. If we then maximize the change of the derivative at this fixed point, we are likely to achieve quite good sensitivity. We will also place a fixed point in the red part of the spectrum to give the blue-yellow filter neutral green-red properties. To realize this, we put in series a polarizer, a birefringence plate of optical path difference 2.25 λ, where λ = 5300Å (green) with the axis at 45° to the polarizer, then a soft-mode cell pair and finally an analyzer (see Figure 13(a)). Each electroclinic cell should have the thickness 1.93 µm, and the pair should be geometrically arranged and controlled in the same way as previously described for the cell pair in Figure 5. This combination is now going to act as the blue-yellow filter. The green-red filter is the same combination, but with λ = 5750Å (yellow), and with each electroclinic cell of thickness 2.17 µm. The pivot filters could, of course, have one analyzer/polarizer in common. The optic axes of both electroclinic cell pairs are assumed to be controlled independently with a swing of 22.5° for each cell. The transmission spectra are shown in Figure 13 (b,c and d). Figure 13(d) displays the area covered in the CIE diagram: It is comparable to that of colour cathode ray tubes, and all different hues can be reached, although the colours, as in teh CRT case, are not fully saturated. The transmission of the whole combination varies between 6% and 37%. The filter combinations could be optimized further to give even better characteristics according to the demands of the possible applications. Especially, the dispersion of the fixed birefringent plates could be tailored to extend the usable wavelength range. Also the sliding-minimum filter becomes much better, but at the same time more complicated if we use a thicker retarder plate together with double electroclinic cells. We then get a "sliding-maximum" filter, with transmission maxima and minima, that could be moved along the wavelength axis by the applied field. Again, these general ideas of colour formation could, of course, also be used in devices containing ferroelectric liquid crystals in the chiral smectic-C phase, where also bigger tilt angles are available. We can also note that it is possible to incorporate multiple cells in the design of narrow band birefringent colour filters, and in this way get tunable Lyot-Öhman filters or tunable Solc-filters. These could be used in various scientific instruments, where speed together with simple, compact and robust design is attractive.

Also in the case of colour generation, reflective devices are of great interest, because of the possibility to reduce the number of active cell components in the reflective mode. In principle, the analog of the pivot filter combination of Figure 17 could be made with only two electroclinic cells. We will lose in colour saturation compared to the pivot filter combination with four electroclinic cells, but if the filters are combined with a mirror to a thin package, the two passages of light will partly compensate for the loss in colour saturation. At the same time we will lose in brightness, and that is more critical for a reflective device than for a backlit transmissive. Thus a compromise must be made between contrast and brightness. A construction would benefit if colour selective partial polarizers could be included. Such polarizers should absorb only in yellow and blue, or only in red and green. (Also the transmissive pivot colour filters could benefit from such polarizers.) The angular dependence of the device is more critical for a reflective device than for a transmissive. With this limitation, however, the optical component would act as high speed colour mirror, capable of reflecting different colour components in the incoming light, according to the applied control voltages. In combination with the single two pass cell of Figure 3(b) and TFT addressing, it could be used for high resolution colour video screen with continuous colours and shades only working in ambient ligth. If bistable ferroelectric liquid crystals are used instead, corresponding computer displays with a fixed number of colurs could be constructed.

The orthogonal chiral smectic liquid crystals are a presently unexplored class of electro-optic materials with high-performance potential. They will be an important complement to the tilted chiral smectics, whose properties and uses in physical devices have been the object of intense research and development over the last 5 years.

The study of the physical and electro-optical properties of the smectic-A* phase, being the most important representative and so far practically also the only available material of the orthogonal smectic class, has revealed that its applications will lie in slightly different areas than the applications of the smectic-C* phase with a certain area of overlap. The existence of a bistable electro-optic effect in teh C* phase makes this class of materials generally more useful. On the other hand, the electro-optic effect in the A* phase is the most rapid of those found in liquid crystals to date. Response times are presently of the order to 500 ns at room temperature should become much less at elevated temperatures and even for the future polymer A* materials we may expect values below 100 µs. Modulation linearity and available continuous gray shade add to the usefulness of the effect, together with the possibility to use it also in the ultraviolet and infrared regions. On the negative side is a limited modulation depth or contrast if high transmission is required. This is due to the limited amplitude in the induced tilt, which is the underlying basic effect (electroclinic effect). The expected forthcoming rapid development in broadband smectic-A* mixtures is likely to change this situation.

As single electro-optic components, the performance of the smectic-A* and C* devices have to be compared to those of available materials using electro-optic, magneto-optic and acousto-optic effects. It is then clear, for instance, that a double A* cell at least up to about 2MHz, is a much simpler and much more versatile device than a Faraday rotator. Both A* and C* devices would also compare favourably with both Pockels, Kerr and acoustic-optic modulators. In general terms, the unique feature of liquid crystals is that we may have a birefringence Δn that is independent of the applied field which only controls the direction of the optic axis. For the chiral smectic liquid crystals, there are two options: Either we have in the A* phase (or other chiral orthogonal phases) an axis direction that is a linear function of E, whereas the switching speed is independent of E, or we have in the C* phase (or other chiral tilted phases) the opposite case where the much bigger angular deviation is largely independent of E, whereas the switching speed is essentially linear in E. The values of birefringence (0.1-0.3) are giant compared to Δn introduced by Pockels and, especially, Kerr effects. This permits very thin layers to be used and gives the component a very small physical configuration lika a normal polarizer or retarder plate at the same time as only low voltages (<100 V) are applied. Furthermore, the acceptance angle for the incoming light is much larger than that of a Pockels cell. Together, these properties make FLC (ferroelectric liguid-crystal) devices, especially those using the soft-mode in the A* phase, very attractive for all kinds of cheap and compact shutters and modulators up to about 100 kHz (C*) or about 2 mKz (A*). Compared to the acousto-optic modulators, the FLC devices have the advantage, in spite of their overall compactness of much higher apertures, especially as beam deflectors or in similar applications. They seem to be suitable for very much the same applications as acousto-optic modulators, e.g. image scanners, printers and real-time signal-processing devices for correlation, spectral analyses, and more.

The virtually unlimited apertures of liquid crystal devices will also be the basis for SMFLC applications in camera shutters (high-speed photography), permitting not only exposure as time integrals, but control of the aperture function in time (square wave, sawtooth, etc) and with all parts of the aperture field exposed simultaneously. Applications for stereoscopic displays, for instance, using the rapid switching between orthogonal polarization states (cf. Fig 10) and in automatic welding glasses and laser and flash goggles, are similar.

The large available active areas also permit simple manufacturing of linear shutter arrays, which probably will replace many optical designs where mechanical devices are used for light deflection, for example, the rotating mirrors in laser printers. The more versatile control possibilities of the linear arrays make new design concepts available. Again, two chiral smectic options are available: Direct drive high-speed A* phase devices with continuous grey scale or multiplexable C* phase devices with no intrinsic grey scale.

Due to the lack of memory in the soft-mode devices, these would have to be active-matrix addressed, electrically or optically, for making two-dimensional discrete arrays. Such arrays, using thin-film transistors and a smectic-A* cell in reflective mode is probably the ultimate in performance for optical computing using liquid crystals due to the high speed together with the very important depth of continuous grey shades (see Figure 11). The same is true for nondiscrete optical processing devices like silicon-addressed spatial light modulators.

Several examples of colour generation have already been pointed out above. One application of electroclinic colour switches would be together with black and white cathode ray tubes, where this kind of colour switch could make high resolution more easily obtainable and also allow integration with a polarization modulator for steroscopic vision. Another example is ferroelectric displays in the "sequential backlighting" approach, where the information is written to the screen one colour at a time, in a rapid time sequence and the screen is illuminated by a synchronized sequence of coloured flashes. In such a device the inclusion of suitable electroclinic filters means that only one flash lamp is needed instead of three flash lamps. Finally, we want to stress what we believe is a particularly interesting application of the electroclinic colour filter: Besides colour separation in colour scanners and in general colour sensors, it will, in conjunction with a charge-coupled device (CCD), permit a very simple compact, and cheap, colour-TV camera, where the three colours red, green and bue are electrically scanned.

## Claims

1. A device comprising a ferroelectric or electroclinic response type liquid crystal plate between electrodes wherein the molecular axes of the liquid crystal molecules are rotatable around a direction corresponding to that of incoming light in response to an electric field, and the liquid crystal is in the smectic phase with bookshelf geometry,
a polarizer for generating an incoming polarized light plane, said polarizer having a polarization direction set parallel to one electrically selectable molecular axis direction of the liquid crystal; said one molecular direction being selected in response to a first electric field;
a quarter wave retarder plate and a mirror arranged such that the incoming light is passed from the polarizer through the liquid crystal plate and the retarder plate, and is reflected as an outgoing light by the mirror in the opposite direction back through the retarder plate and liquid crystal plate, **characterized** by said retarder plate having its slow axis inclined either 45° or 135° relative to the slow axis of the liquid crystal in the said one electrically selectable molecular direction;
said liquid crystal plate being a halfwave plate, the device thereby being arranged to generate a first outgoing polarized light plane which is perpendicular to said one electrically selectable molecular axis direction in response to said first electric field;
said liquid crystal being of material producing an angular difference 2θ in optic axis direction upon reversal of said first electric field, where θ is the liquid crystal tilt angle the device thereby being arranged to generate a second outgoing polarized light plane which is turned in relation to said first outgoing polarized light plane by an angle of 8θ.

2. A device according to claim 2, **characterized** in that the reversal of the electric field causes the slow axis of the liquid crystal to rotate between 0° and 22.5° direction relative to the transmission direction of the polarizer, whereas the slow axis of the quarterwave plate is inclined by 135° or 45°, measured in the same sense relative to the said polarizer.

3. A device comprising a first ferroelectric or electroclinic response type liquid crystal halfwave plate between electrodes, wherein the molecular axes of the liquid crystal molecules are rotatable around a direction corresponding to that of an incoming light in response to an electric field, and the liquid crystal is in the smectic phase with bookshelf geometry, **characterized** by a second ferroelectric or electroclinic response type liquid crystal halfwave plate between electrodes, the device being arranged such that one electrically selectable molecule direction of the first halfwave plate is parallel to the polarization plane of the incoming polarized light when a first electric field is applied to the first halfwave plate;
the device being arranged to pass the polarized light through the first and the second halfwave plate so as to provide an outgoing light;
said first and second halfwave plates having their slow optic axes in perpendicular directions to each other when said first electric field is selected, so as to provide a first polarization plane of said outgoing light;
the optic axes of the molecules in the first halfwave plate being arranged to move in opposite angular direction to the movement of the optic axes of the molecules in the second halfwave plate upon electric field reversal, and where the optic axes of the molecules in an individual halfwave plate turn by an angle 2θ upon reversal of said electric field thereby providing a second polarization plane of the outgoing light, where θ is the liquid crystal tilt angle, said second polarization plane being turned in relation to said first polarization plane, by an angle 8θ.

4. A device according to claim 3, **characterized in** that polarizers are mounted before said first liquid crystal halfwave plate, and after said second liquid crystal halfwave plate.

5. A device according to claim 3, **characterized in** that said liquid crystal halfway plates comprise a material capable of giving a difference 2θ in optic axis direction of 22,5° upon field reversal.

6. A device according to claim 3, **characterized in** that a plurality of n pairs of liquid crystal halfwave plates are arranged in series, the liquid crystal material of which permitting an optic axis rotation 2θ of 22,5/n degrees upon reversing the field applied to each cell.

7. A device according to one of claims 3 - 6, **characterized in** that the opposite angular swings of the optic axes in the halfwave plates of a pair on field reversal is accomplished by having opposite of the voltages acting across the invidual cells.

8. A device according to any one of claims 3 - 6, **characterized in** that equal signs of polarity are to be applied accross said individual cells in a pair, the opposite signs of swings being obtained by using antipode materials in the two cells of a said pair.

9. A device according to any one of claims 3, 5, 7 or 8, **characterized** in that a quarterwave retarder is placed behind the halfwave plates, the combination being able to change the state of polarization of linearly polarized incomning light vibrating at 45° to the optic axes of the halfwave pair into three different electrically selectable polarization states of the outgoing light.

10. A device according to any one of claim 9, **characterized** in that 2θ = 22.5°, giving two orthogonal circularly polarized states for ±E, where E is applied field and a linearly polarized state for E = 0 or two orthogonal linear states for ±E and one circular state for E = 0, depending on whether the quarterwave plate is oriented with its axis parallel or inclined 45° to the incoming polarization respectively.

11. A device according to any one of claims 1 and 3, 5 or 6, **characterized** in that a said halfwave liquid crystal is electrically addressable by means of an adjacent photoconductor.

12. A device according to any one of claims 3, 5 or 6, **characterized** in that said liquid crystals are followed by a birefringent plate for spatially displacing a light beam having passed said liquid crystals according to its polarization state.

13. A device according to any one of claims 3, 5 or 6, **characterized** in that said liquid crystals are followed by a Glan Thomson or equivalent prism, for obtaining a different polarization state and a directional splitting of light corresponding to the sign of applied control voltage, for making a multichannel electrooptic switch.

14. A device according to any one of claims 3, 5 or 6, **characterized** in that said liquid crystals are followed by one or more birefringent prisms, for obtaining an electrically controlled beam-splitter.

15. A device according to any one of claims 3, 5 or 6, **characterized** in that said liquid crystals are confined by parts of a double prism, said combination acting as a beam splitter or beam switch by electrically controlling the direction of the liquid crystal axes and thereby the reflexion of an internal glass surface of the double prism.

16. A device according to any one of the previous claims, **characterized** in that said liquid crystals is a smectic or nematic liquid crystal in a monomeric or polymeric state.

17. A device according to any one of claims 3, 5 or 6, **characterized** in that a 2.25 λ plate and said paired liqudid crystal halfwave plates, formed from SMFLC material, are mounted between crossed polarizers in a first combination, a second combination identical to the first combination being mounted turned 90° relative to the first combination, the respective 2.25 λ plates being mounted with their optical axes at 45° relative to the respective common directions of polarizers and SMFLC optic axis.

18. The use of a device of claim 17 as a colour filter for mounting in a TV camera, for scanning sequentially three different colours as a red, a blue and a green colour.

19. A device comprising a first electroclinic response type liquid crystal halfwave plate between electrodes, wherein the molecular axes of the liquid crystal molecules are rotatable around a direction corresponding to that of incoming light in response to an electric field, and the liquid crystal is in the smectic phase with bookshelf geometry,
said device further comprising a polarizer for polarizing an incoming light;
a first birefringent plate, and
an analyzer; **characterized** by said polarizer having a polarizing direction set parallel to one electrically selectable direction of the molecular axes;
said first birefringent plate being a fullwave plate having its optical axis inclined by 45° relative to the said one electrically selectable direction;
a second birefringent plate, said second plate being a quarterwave plate, having its optical axis set parallel to the said one electrically selectable direction; said analyzer having its optical axis inclined by 90° relative to the said one electrically selectable direction; said liquid crystal halfwave plate in cooperation with said polarizer, said first birefringent plate, said second birefringent plate and said analyzer being arranged to influence the transmittance of an incoming light so as to create a transmission minimum for a selected wavelength of light, said transmission minimum wavelength being displaceable in response to said electric field.

## Patentansprüche

1. Vorrichtung mit einer zwischen Elektroden angeordneten, auf ferroelektrische oder elektroklinische Effekte ansprechende Flüssigkristallplatte, in der die molekularen Achsen der Flüssigkristallmoleküle um eine Richtung, die derjenigen des einfallenden Lichtes entspricht, als Funktion des elektrischen Feldes drehbar sind, und das Flüssigkristall sich in der smektischen Phase mit Bücherbordgeometrie (bookshelf geometry) befindet,
einem Polarisator zum Erzeugen einer einfallenden polarisierten Lichtebene, wobei der Polarisator eine Polarisationsrichtung hat, die parallel zu einer elektrisch auswählbaren molekularen Achsenrichtung des Flüssigkristalls eingestellt ist; wobei die molekulare Richtung als Funktion eines ersten elektrischen Feldes ausgewählt wird;
einer Viertelwellenlängenverzögerungsplatte und einem Spiegel, die so angeordnet sind, daß das einfallende Licht von dem Polarisator durch die Flüssigkristallplatte und die Verzögerungsplatte geführt und als auslaufendes Licht von dem Spiegel in die entgegengesetzte Richtung zurück durch die Verzögerungsplatte und die Flüssigkristallplatte reflektiert wird,
**dadurch gekennzeichnet**,
daß die langsame Achse der Verzögerungsplatte um entweder 45 ° oder 135 ° relativ zu der langsamen Achse des Flüssigkristalls in der einen elektrisch auswählbaren molekularen Richtung geneigt ist;
wobei die Flüssigkristallplatte eine Halbwellenlängeplatte ist, so daß die Vorrichtung eine erste auslaufende polarisierte Lichtebene erzeugen kann, die senkrecht zu der einen elektrisch auswählbaren molekularen Achsenrichtung als Funktion des ersten elektrischen Feldes ist;
wobei das Flüssigkristall aus einem Material ist, das eine Winkeldifferenz 2θ in optischer Achsenrichtung bei der Umkehrung des ersten elektrischen Feldes erzeugt, wobei θ der Neigungswinkel des Flüssigkristalls ist, wodurch die Vorrichtung in der Lage ist eine zweite auslaufende polarisierte Lichtebene zu erzeugen, die bezüglich der ersten auslaufenden polarisierten Lichtebene um einen Winkel von 8θ gedreht ist.

2. Vorrichtung gemäß Anspruch 1, **dadurch gekennzeichnet**, daß die Umkehrung des elektrischen Feldes eine Drehung der langsamen Achse des Flüssigkristalles zwischen 0 ° und 22,5 ° in Richtung relativ zur Durchlaßrichtung des Polarisators bewirkt, während die langsame Achse der Viertelwellenlängenplatte um 135 ° oder 45 °, gemessen in der gleichen Weise relativ zu dem Polarisator, geneigt wird.

3. Vorrichtung mit einer zwischen Elektroden angeordneten, auf ferroelektrische oder elektroklinische Effekte ansprechende Flüssigkristallhalbwellenplatte, in der die molekularen Achsen der Flüssigkristallmoleküle um eine Richtung, die derjenigen eines einkommenden Lichts entspricht, als Funktion eines elektrischen Feldes drehbar sind, und das Flüssigkristall in der smektischen Phase mit Bücherbordgeometrie ist,
**gekennzeichnet durch**
eine zweite zwischen Elektroden angeordnete, auf ferroelektrische oder elektroklinische Effekte ansprechende Flüssigkristallhalbwellenplatte, wobei die Vorrichtung so angeordnet ist, daß eine elektrisch auswählbare Molekülrichtung der ersten Halbwellenlängenplatte parallel zu der Polarisationsebene des einfallenden polarisierten Lichtes ist, wenn ein erstes elektrisches Feld an die erste Halbwellenlängenplatte gelegt wird;
wobei die Vorrichtung so beschaffen ist, daß polarisiertes Licht durch die erste und die zweite Halbwellenlängenplatte läuft, um so ein auslaufendes Licht zu schaffen;
wobei die ersten und zweiten Halbwellenlängenplatten ihre langsamen optischen Achsen in senkrechten Richtungen zueinander ausgerichtet haben, wenn das erste elektrische Feld ausgewählt wird, um so eine erste Polarisationsebene des auslaufenden Lichtes zu schaffen;
die optischen Achsen der Moleküle der ersten Halbwellenplatte so angeordnet sind, daß sie sich in entgegengesetzte Winkelrichtung zu der Bewegung der optischen Achsen der Moleküle in der zweiten Halbwellenplatte aufgrund der Umkehrung des elektrischen Feldes bewegen, und wo die optischen Achsen der Moleküle in einer einzelnen Halbwellenplatte sich um einen Winkel 2θ aufgrund der Umkehrung des elektrischen Feldes drehen, wodurch eine zweite Polarisationsebene des auslaufenden Lichtes geschaffen wird, wobei θ der Neigungswinkel des Flüssigkristalls ist, wobei die zweite Polarisationsebene in Bezug zur ersten Polarisationsebene um einen Winkel 8θ gedreht wird.

4. Vorrichtung nach Anspruch 3, **dadurch gekennzeichnet**, daß Polarisatoren vor der ersten Flüssigkristallhalbwellenplatte und nach der zweiten Flüssigkristallhalbwellenplatte angeordnet sind.

5. Vorrichtung nach Anspruch 3, **dadurch gekennzeichnet**, daß die Flüssigkristallhalbwellenplatten ein Material aufweisen, das in der Lage ist, eine Differenz 2θ in optischer Achsenrichtung von 22,5 ° aufgrund der Feldumkehrung zu ergeben.

6. Vorrichtung nach Anspruch 3, **dadurch gekennzeichnet,** daß eine Vielzahl von n Flüssigkristallhalbwellenplattenpaaren seriell angeordnet sind, wobei deren Flüssigkristallmaterial eine optische Achsendrehung 2θ von 22,5/n Grad aufgrund der Umkehrung des elektrischen Feldes erlaubt, das an jede Zelle angelegt wird.

7. Vorrichtung nach einem der Ansprüche 3 - 6, **dadurch gekennzeichnet**, daß die entgegengesetzten Winkelausschläge der optischen Achsen der Halbwellenplatten eines Paares aufgrund der Feldumkehrung durch entgegengesetzte Spannungen bewirkt wird, die auf die einzelnen Zellen wirken.

8. Vorrichtung nach einem der Ansprüche 3 - 6, **dadurch gekennzeichnet**, daß gleiche Polaritätsvorzeichen an einzelne Zellen eines Paares angelegt werden müssen, wobei die Vorzeichen der Ausschläge unter Verwendung antipodischer Materialien in den zwei Zellen des Paares erzielt werden.

9. Vorrichtung nach einem der Ansprüche 3, 5, 7 oder 8, **dadurch gekennzeichnet**, daß ein Viertelwellenverzögerer hinter den Halbwellenplatten angeordnet ist, wobei die Kombination in der Lage ist, den Polarisationszustand des einfallenden linear polarisierten Lichts, das unter 45 ° zu der optischen Achse des Halbwellenpaares schwingt, in drei verschiedene elektrisch auswählbare Polarisationszustände des auslaufenden Lichtes zu ändern.

10. Vorrichtung nach Anspruch 9, **dadurch gekennzeichnet**, daß 2θ = 22,5 °, was zwei orthogonal zueinander zirkular polarisierte Zustände für ± E, wobei E das angelegte Feld ist, und einen linear polarisierten Zustand für E = 0 oder zwei orthogonale lineare Zustände für ± E und einen zirkularen Zustand für E = 0 in Abhängigkeit davon ergibt, ob die Viertelwellenplatte mit ihrer Achse parallel oder um 45 ° geneigt zu der entsprechenden einkommenden Polarisation ausgerichtet ist.

11. Vorrichtung nach einem der Ansprüche 1 und 3, 5 oder 6, **dadurch gekennzeichnet**, daß das Halbwellenflüssigkristall mittels eines angrenzenden Fotoleiters elektrisch adressierbar ist.

12. Vorrichtung nach einem der Ansprüche 3, 5 oder 6, **dadurch gekennzeichnet**, daß nachfolgend der Flüssigkristalle eine doppelbrechende Platte zum räumlichen Versetzen eines Lichtstrahls angeordnet ist, der die Flüssigkristalle entsprechend seinem Polarisationszustand durchlaufen hat.

13. Vorrichtung nach einem der Ansprüche 3, 5 oder 6, **dadurch gekennzeichnet**, daß zum Erzeugen eines elektrooptischen Vielkanalschalter nachfolgend der Flüssigkristalle ein Glan-Thomson Prisma oder ein äquivalentes Prisma angeordnet ist, um einen anderen Polarisationszustand und eine richtungsmäßige Aufspaltung des Lichts entsprechend dem Vorzeichen der angelegten Steuerspannung zu erzielen.

14. Vorrichtung nach einem der Ansprüche 3, 5 oder 6, **dadurch gekennzeichnet**, daß nachfolgend der Flüssigkristalle ein oder mehrere doppelbrechende Prismen angeordnet sind, um einen elektrisch gesteuerten Strahlteiler zu erzielen.

15. Vorrichtung nach einem der Ansprüche 3, 5 oder 6, **dadurch gekennzeichnet**, daß die Flüssigkristalle durch Teile eines Doppelprismas eingeschlossen werden, wobei die Kombination als Strahlteiler oder Strahlschalter durch das elektrische Steuern der Richtung der Flüssigkristallachsen und dadurch der Reflexionen auf einer internen Glasoberfläche des Doppelprismas wirkt.

16. Vorrichtung nach einem der vorangegangenen Ansprüche, **dadurch gekennzeichnet**, daß die Flüssigkristalle smektische oder nematische Flüssigkristalle in einem monomeren oder polymeren Zustand sind.

17. Vorrichtung nach einem der Ansprüche 3, 5 oder 6, **dadurch gekennzeichnet**, daß eine 2,25 λ -Platte und die gepaarten Flüssigkristallhalbwellenplatten, hergestellt aus SMFLC-Material, zwischen gekreuztem Polarisieren in einer ersten Kombination angeordnet sind, eine zweite Kombination identisch mit der ersten Kombination um 90 ° relativ zu der ersten Kombination gedreht wird, wobei die entsprechenden 2,25 λ-Platten mit ihren optischen Achsen unter 45 ° relativ zu den entsprechenden allgemeinenen Richtungen der Polarisatoren und der SMFLC optischen Achse angeordnet werden.

18. Verwendung der Vorrichtung nach Anspruch 17 als Farbfilter zum Anordnen in einer Fernsehkamera, um sequentiell die drei verschiedenen Farben als rote, blaue und grüne Farbe zu scannen.

19. Vorrichtung mit einer zwischen Elektroden angeordneten, auf elektroklinische Effekte ansprechende ersten Flüssigkristallhalbwellenplatte, worin die molekularen Achsen der Flüssigkristallmoleküle um eine Richtung entsprechend derjenigen des einfallenden Lichtes als Funktion eines elektrischen Feldes drehbar sind, und das Flüssigkristall sich in einer smektischen Phase mit Bücherbordgeometrie befindet,
wobei die Vorrichtung weiter einen Polarisator zum Polarisieren eines einfallenden Lichtes aufweist;
einer ersten doppelbrechenden Platte, und
einem Analysator; **dadurch gekennzeichnet**, daß der Polarisator eine Polarisationsrichtung hat, die parallel zu einer der elektrisch auswählbaren Richtungen der molekularen Achsen eingestellt ist;
wobei die erste doppelbrechende Platte eine Vollwellenplatte ist, deren optische Achse um 45 ° relativ zu der einen elektrisch auswählbaren Richtung geneigt ist;
einer zweiten doppelbrechenden Platte, wobei die zweite Platte eine Viertelwellenlängenplatte ist, deren optische Achse parallel zu der einen elektrisch ausgewählten Richtung eingestellt ist;
wobei die optische Achse des Analysators um 90 ° relativ zu der einen elektrisch ausgewählten Richtung geneigt ist;
wobei die Flüssigkristallhalbwellenplatte in Zusammenwirkung mit dem Polarisator, der ersten doppelbrechenden Platte, der zweiten doppelbrechenden Platte und dem Analysierer in der Lage ist die Transmission eines einfallenden Lichtes zu beeinflussen, um so ein Transmissionsminimum für eine ausgewählte Wellenlänge des Lichtes zu erzeugen, wobei die Wellenlänge minimaler Transmissions als Funktion des elektrischen Feldes verschiebbar ist.

## Revendications

1. Dispositif comprenant une lame de cristaux liquides du type à réponse ferro-électrique ou électroclinique entre des électrodes, dans lequel les axes moléculaires des molécules de cristal liquide peuvent tourner autour d'une direction correspondant à celle de la lumière incidente en réponse à un champ électrique, et le cristal liquide se trouve dans la phase smectique avec une géométrie en forme d'étagère,
un polariseur pour générer un plan de lumière polarisée incidente, ledit polariseur présentant une direction de polarisation parallèle à une direction d'axe moléculaire, sélectionnable électriquement, du cristal liquide, ladite direction moléculaire étant sélectionnée en réponse à un premier champ électrique;
une lame quart-d'onde retardatrice et un miroir disposés de telle sorte que la lumière incidente passe du polariseur à travers la lame de cristaux liquides et la lame retardatrice et soit réfléchie, en tant que lumière sortante, par le miroir dans la direction opposée, vers l'arrière, à travers la lame retardatrice et la lame de cristaux liquides,
caractérisé en ce que:
l'axe lent de ladite lame retardatrice est incliné soit de 45° soit de 135° par rapport à l'axe lent du cristal liquide dans ladite direction moléculaire sélectionnable électriquement;
ladite lame de cristaux liquides est une lame demi-onde, et ledit cristal liquide est un matériau produisant une différence angulaire de 2θ dans la direction de l'axe optique lors de l'inversion dudit premier champ électrique, θ étant l'angle de basculement du cristal liquide, le dispositif étant ainsi agencé de manière à générer un second plan de lumière polarisée sortante qui tourne d'un angle de 8θ par rapport audit premier plan de lumière polarisée sortante.

2. Dispositif selon la revendication 2, caractérisé en ce que l'inversion du champ électrique à pour effet de faire tourner la direction de l'axe lent du cristal liquide entre 0° et 22, 5° par rapport à la direction de transmission du polariseur, tandis que l'axe lent de la lame quart-d'onde est incliné de 135° ou 45° mesurés dans le même sens par rapport audit polariseur.

3. Dispositif comprenant une première lame demi-onde de cristaux liquides du type à réponse ferro-électrique ou électroclinique entre des électrodes, dispositif dans lequel les axes moléculaires des molécules de cristal liquide peuvent tourner autour d'une direction correspondant à celle d'une lumière incidente en réponse à un champ électrique et le cristal liquide se trouve dans la phase smectique avec une géométrie en forme d'étagère, caractérisé en ce qu'il comprend une seconde lame demi-onde de cristaux liquides du type à réponse ferro-électrique ou électroclinique, le dispositif étant agencé de telle sorte qu'une seule direction des molécules, sélectionnable électriquement, de la première lame demi-onde soit parallèle au plan de polarisation de la lumière polarisée incidente quand un premier champ électrique est appliqué à la première lame demi-onde;
le dispositif étant agencé de manière à laisser passer la lumière polarisée à travers les première et seconde lames demi-onde de manière à fournir une lumière sortante;
les axes optiques lents desdites première et seconde lames demi-onde s'étendant dans des directions perpendiculaires l'une par rapport à l'autre quand ledit premier champ électrique est sélectionné, de manière à fournir un premier plan de polarisation de ladite lumière sortante;
les axes optiques des molécules de la première lame demi-onde étant disposés de manière à se déplacer dans une direction angulaire opposée à celle du déplacement des axes optiques des molécules de la seconde lame demi-onde lors de l'inversion du champ électrique, et, si les axes optiques des molécules d'une lame demi-onde individuelle tournent d'un angle de 2θ lors de l'inversion dudit champ électrique, produisant ainsi un second plan de polarisation de la lumière sortante, θ étant l'angle de basculement du cristal liquide, ledit second plan de polarisation tourne d'un angle de 8θ par rapport audit premier plan de polarisation.

4. Dispositif selon la revendication 3, caractérisé en ce que des polariseurs sont montés avant ladite première lame demi-onde de cristaux liquides et après ladite seconde lame demi-onde de cristaux liquides.

5. Dispositif selon la revendication 3, caractérisé en ce que lesdites lames demi-onde de cristaux liquides comprennent une matière capable de donner une différence de 2θ dans la direction de 22,5° de l'axe optique lors de l'inversion du champ.

6. Dispositif selon la revendication 3, caractérisé en ce qu'une pluralité de n paires de lames demi-onde de cristaux liquides sont disposées en série, les cristaux liquides de ces lames permettant une rotation de 2θ de 22,5/n degrés de l'axe optique lors de l'inversion du champ appliqué à chaque cellule.

7. Dispositif selon l'une quelconque des revendications 3 - 6, caractérisé en ce que les oscillations angulaires opposées des axes optiques dans les lames demi-onde d'une paire lors de l'inversion du champ ont lieu du fait que des tensions opposées agissent transversalement aux cellules individuelles.

8. Dispositif selon l'une quelconque des revendications 3 - 6, caractérisé en ce que des polarités de signes égaux doivent être appliqués transversalement auxdites cellules individuelles d'une paire, les signes opposés des oscillations étant obtenus par utilisation de matières de propriétés opposées dans les deux cellules de ladite paire.

9. Dispositif selon l'une quelconque des revendications 3, 5, 7 ou 8, caractérisé en ce qu'une lame quart-d'onde retardatrice est placée derrière les lames demi-onde, la combinaison étant capable de changer l'état de polarisation de la lumière incidente, polarisée linéairement et vibrant à 45° par rapport aux axes optiques de la paire de lames demi-onde dans trois états différents de polarisation sélectionnables électriquement de la lumière sortante.

10. Dispositif selon la revendication 9, caractérisé en ce que 2 θ = 22,5°, ce qui donne deux états orthogonaux polarisés circulairement pour ± E, E étant le champ appliqué, et un état polarisé linéairement pour E = 0 ou deux états linéaires orthogonaux pour ±E ainsi qu'un seul état circulaire pour E = 0, selon que la lame quart-d'onde est orientée avec son axe parallèle à la polarisation de la lumière incidente ou incliné de 45° par rapport à cette polarisation de la lumière incidente, respectivement.

11. Dispositif selon l'une quelconque des revendications 1 et 3, 5 ou 6, caractérisé en ce que ladite lame demi-onde de cristaux liquides peut être adressée électriquement au moyen d'un photoconducteur adjacent.

12. Dispositif selon l'une quelconque des revendications 3, 5 ou 6, caractérisé en ce que lesdits cristaux liquides sont suivis par une lame biréfringente destinée à déplacer spatialement un faisceau de lumière ayant traversé lesdits cristaux liquides selon leur état de polarisation.

13. Dispositif selon l'une quelconque des revendications 3, 5 ou 6, caractérisé en ce que lesdits cristaux liquides sont suivis par un prisme Glan Thomson ou un prisme équivalent, pour que soient obtenus un état de polarisation différent et une division directionnelle de la lumière correspondant au signe de la tension de commande appliquée pour réaliser un interrupteur électro-optique multicanaux.

14. Dispositif selon l'une quelconque des revendications 4, 5 ou 6 caractérisé en ce que lesdits cristaux liquides sont suivis par une ou plusieurs prismes biréfringents pour obtenir un diviseur de faisceau commandé électriquement.

15. Dispositif selon l'une quelconque des revendications 3, 5 ou 6, caractérisé en ce que lesdits cristaux liquides sont confinés par des parties d'un double prisme, ladite combinaison agissant comme un diviseur de faisceau ou interrupteur de faisceau en commandant électriquement la direction des axes des cristaux liquides et de ce fait la réflexion d'une surface interne en verre du double prisme.

16. Dispositif selon l'une quelconque des revendications précédentes, caractérisé en ce que lesdits cristaux liquides sont des cristaux liquides smectiques ou nématiques dans un état monomère ou polymère.

17. Dispositif selon l'une quelconque des revendications 3, 5 ou 6, caractérisé en ce qu'une lame de 2,25 λ et lesdites lames demi-onde appariées de cristaux liquides, formées d'une matière SMFLC, sont montées entre des polariseurs croisés dans une première combinaison , une seconde combinaison identique à la première combinaison étant montée avec une rotation de 90° par rapport à la première combinaison, les lames de 2,25 λ respectives étant montées avec leur axes optiques à 45° par rapport aux directions communes respectives des polariseurs et de l'axe optique SMFLC.

18. Utilisation d'un dispositif selon la revendication 17 comme filtre de couleurs destiné à être monté dans une caméra TV pour un balayage séquentiel de trois couleurs différentes, telles que la couleur rouge, la couleur bleue et la couleur verte.

19. Dispositif comprenant une lame demi-onde en cristaux liquides entre des électrodes, dans lequel les axes moléculaires des molécules de cristal liquide peuvent tourner autour d'une direction correspondant à celle de la lumière incidente en réponse à un champ électrique, et le cristal liquide se trouve dans la phase smectique avec une géométrie en forme d'étagère,
ledit dispositif comprenant, en outre, un polariseur pour polariser une lumière incidente;
une première lame biréfringente, et
un analyseur;
caractérisé en ce que ledit polariseur présente une direction de polarisation parallèle à une direction sélectionnable électriquement des axes moléculaires;
ladite première lame biréfringente étant une lame pleine-onde dont l'axe optique est incliné de 45° par rapport à ladite direction sélectionnable électriquement;
une seconde lame biréfringente, ladite seconde lame étant une lame quart-d'onde dont l'axe optique est parallèle à ladite direction sélectionnable électriquement;
ledit analyseur ayant son axe optique incliné de 90° par rapport à ladite direction sélectionnable électriquement;
ladite lame demi-onde de cristaux liquides, en coopération avec ledit polariseur, ladite première lame biréfringente, ladite seconde lame biréfringente et ledit analyseur, étant disposée de manière à influencer la transmittance d'une lumière incidente afin de créer un minimum de transmission pour une longueur d'onde de lumière sélectionnée, ladite longueur d'onde minimale de transmission étant déplaçable en réponse audit champ électrique.
